# EUROPÄISCHE PATENTSCHRIFT

(11) **EP 2 805 081 B1**
(45) Veröffentlichungstag und Bekanntmachung des Hinweises auf die Patenterteilung: **30.03.2016**
(21) Anmeldenummer: 13703741.2
(22) Anmeldetag: 18.01.2013
(51) Int. Cl.: H01F 7/126, H01F 7/16, F16F 1/10, F16F 3/02

(54) **LINEARLAGER UND HUBMAGNET UMFASSEND EIN DERARTIGES LINEARLAGER**
LINEAR BEARING AND SOLENOID COMPRISING SUCH A LINEAR BEARING
PALIER LINÉAIRE ET AIMANT DE LEVAGE COMPRENANT UN TEL PALIER LINÉAIRE

(30) Priorität: 18.01.2012 EP 12151564
(43) Veröffentlichungstag der Anmeldung: 26.11.2014
(73) Patentinhaber: Burckhardt Compression AG, 8404 Winterthur (CH)
(72) Erfinder: AIGNER, Roland, CH-8051 Zürich (CH)
(74) Vertreter: Dr. Graf & Partner AG
(86) Internationale Anmeldenummer: PCT/EP2013/050916
(87) Internationale Veröffentlichungsnummer: WO 2013/107852

(56) Entgegenhaltungen:
- WO-A1-2005/088159
- DE-A1-102009 035 444
- FR-A1- 2 621 971
- US-A- 3 462 136
- US-A- 5 522 214
- US-A- 5 895 033

## Beschreibung

### Beschreibung

Die Erfindung betrifft ein Linearlager gemäss dem Oberbegriff von Anspruch 1. Die Erfindung betrifft weiter ein Hubmagnet umfassend ein Linearlager gemäss dem Oberbegriff von Anspruch 11.

### Stand der Technik

Das Dokument US 5,895,033 und das Dokument US 5,522,214 offenbaren je ein Linearlager umfassend eine Mehrzahl konzentrisch angeordneter Federn, wobei jede Feder als Tellerfeder ausgestaltet ist und wobei jede Feder einen spiralförmig verlaufenden Federarm aufweist. Diese Linearlager weist den Nachteil auf, dass die Eigenschaften der Linearführung nicht befriedigen.

### Darstellung der Erfindung

Aufgabe der Erfindung ist es ein verbessertes Linearlager sowie ein Hubmagnet umfassend ein verbessertes Linearlager zu bilden.

Diese Aufgabe wird gelöst mit einem Linearlager umfassend die Merkmale von Anspruch 1. Die Unteransprüche 2 bis 10 betreffen weitere, vorteilhafte Ausgestaltungen. Die Aufgabe wird weiter gelöst mit einem Hubmagnet umfassend die Merkmale von Anspruch 11. Die Unteransprüche 12 bis 14 betreffen weitere, vorteilhafte Ausgestaltungen.

Die Aufgabe wird insbesondere gelöst mit einem Linearlager umfassend eine Mehrzahl von konzentrisch angeordneten Federn, wobei jede Feder als eine Tellerfeder ausgestaltet ist mit einem Befestigungsteil und einer im Zentrum angeordneten Bohrung, wobei jede Feder zudem einen Federarm aufweist, welcher ausgehend vom Befestigungsteil in einem Endabschnitt endet, wobei der Endabschnitt die Bohrung aufweist, und wobei die Bohrung konzentrisch zum Befestigungsteil angeordnet ist, wobei jede Feder eine senkrecht zum Befestigungsteil verlaufende Bewegungsrichtung aufweist, und wobei die Federn in Bewegungsrichtung nacheinander folgend angeordnet sind, wobei der Federarm einen konzentrisch zur Bohrung verlaufenden Federarmabschnitt aufweist, der sich entlang eines Winkelbereichs γ zwischen 100° und 270°, und vorzugsweise sich entlang eines Winkelbereichs γ zwischen 180° und 300° erstreckt, wobei das Befestigungsteil zumindest teilweise ringförmig ausgestaltet ist, wobei der Federarmabschnitt in Bezüglich der Bohrung radialer Richtung eine Breite aufweist, welche zumindest fünf Mal grösser ist als die Dicke des Federarms, und wobei die Breite des Federarmabschnitts derart ausgestaltet ist, dass dieser bezüglich dem ringförmigen Befestigungsteil und dem Endabschnitt unter Ausbildung eines seitlichen Spaltes verläuft.

Die Aufgabe wird insbesondere auch gelöst mit einem Linearlager umfassend eine Mehrzahl von konzentrisch angeordneten Federn, wobei jede Feder als eine Tellerfeder ausgestaltet ist mit einem Befestigungsteil und einer im Zentrum angeordneten Bohrung, wobei jede Feder zudem einen insbesondere spiralförmig verlaufenden Federarm aufweist, welcher ausgehend vom Befestigungsteil in einem Endabschnitt endet, wobei der Endabschnitt die Bohrung aufweist, und wobei die Bohrung konzentrisch zum Befestigungsteil angeordnet ist, wobei jede Feder eine senkrecht zum Befestigungsteil verlaufende Bewegungsrichtung aufweist, und wobei die Federn in Bewegungsrichtung nacheinander folgend angeordnet sind, wobei sich der Federarm entlang eines Winkelbereichs zwischen 180° und 300° erstreckt, und wobei der Federarm einen konzentrisch zur Bohrung 2c verlaufenden Federarmabschnitt 2ba aufweist, der sich entlang eines Winkelbereichs γ zwischen 100° und 270° erstreckt, und wobei das Befestigungsteil zumindest teilweise ringförmig ausgestaltet ist, und wobei der Federarm in Bezüglich der Bohrung radialer Richtung eine Breite aufweist, welche zumindest fünf mal grösser ist als die Dicke des Federarms, und wobei die Breite des Federarms derart ausgestaltet ist, dass dieser bezüglich dem ringförmigen Befestigungsteil und dem Endabschnitt unter Ausbildung eines Spaltes verläuft.

Das erfindungsgemässe Linearlager weist den Vorteil auf, dass dieses in radialer Richtung relativ starr ist und eine geringe Verschiebbarkeit in radialer Richtung aufweist, wogegen das Linearlager in Bewegungsrichtung beziehungsweise in Hubrichtung eine relativ grosse Verschiebbarkeit aufweist, was den Vorteil ergibt, dass zum Beispiel ein Hubmagnet umfassend derartige Linearlager einen präzis und sicher gelagerten Hubmagnetstössel aufweist.

Die Feder des Linearlagers ist derart ausgestaltet, dass diese einen Federarmabschnitt aufweist, der konzentrisch zur Mittenbohrung verläuft, wobei sich dieser Federarmabschnitt entlang eines Winkelbereichs zwischen 100° und 270° und vorzugsweise entlang eines Winkelbereichs zwischen 180° und 300° erstreckt. Vorteilhafterweise weist dieser Federarmabschnitt eine konstante Breite auf. Diese Ausgestaltung weist den Vorteil auf, dass die Federarmabschnitte bei einer zunehmenden Auslenkung des Linearlagers in Bewegungsrichtung beziehungsweise in Hubrichtung eine zunehmende Steigung erfahren, und dass die durch die Feder bewirkte Gegenkraft mit zunehmender Auslenkung vorzugsweise linear zunimmt. Während der Auslenkung tritt zudem keine oder eine vernachlässigbar kleine Bewegung in radialer Richtung auf, das heisst, die Feder verursacht während der Auslenkung keine oder eine vorzugsweise vernachlässigbar kleine Drehung des Endabschnittes oder eines mit dem Endabschnitt verbundenen Teils wie eines Stössels. Die Federkonstante des Linearlagers kann durch eine entsprechende Gestaltung des Federarmabschnittes in einem weitern Bereich variiert werden, insbesondere ist es auch möglich besonders leichtgängige Linearlager auszubilden. Die Federkonstante des Linearlagers kann beispielsweise durch die Länge, Breite und/oder Dicke des Federarmabschnittes, und/oder durch das für die Feder verwendete Material und/oder die für ein Linearlager verwendete Anzahl Federn in einem weiten Bereich beeinflusst werden. Über die Federkonstante wird auch der maximal mögliche Hubweg, bei vorgegebener Magnetkraft bestimmt.

Die Erfindung wird nachfolgend an Hand von Ausführungsbeispiel beschreiben.

### Kurze Beschreibung der Zeichnungen

Die zur Erläuterung der Ausführungsbeispiele verwendeten Zeichnungen zeigen:
- Fig. 1: zeigt einen Längsschnitt durch ein Hubmagnet;
- Fig. 2: eine Draufsicht auf das Hubmagnet gemäss Figur 1;
- Fig. 3: eine Seitenansicht des Hubmagnetes gemäss Figur 1;
- Fig. 4: eine Draufsicht auf ein Federelement;
- Fig. 5: eine perspektivische Ansicht eines Linearlagers;
- Fig. 6: einen Schnitt durch das Linearlager;
- Fig. 7: eine Seitenansicht eines ausgelenkten Federelementes;
- Fig. 8: eine Draufsicht auf ein weiteres Ausführungsbeispiel eines Federelementes;
- Fig. 9: eine Draufsicht auf ein weiteres Ausführungsbeispiel eines Federelementes.

Grundsätzlich sind in den Zeichnungen gleiche Teile mit gleichen Bezugszeichen versehen.

### Wege zur Ausführung der Erfindung

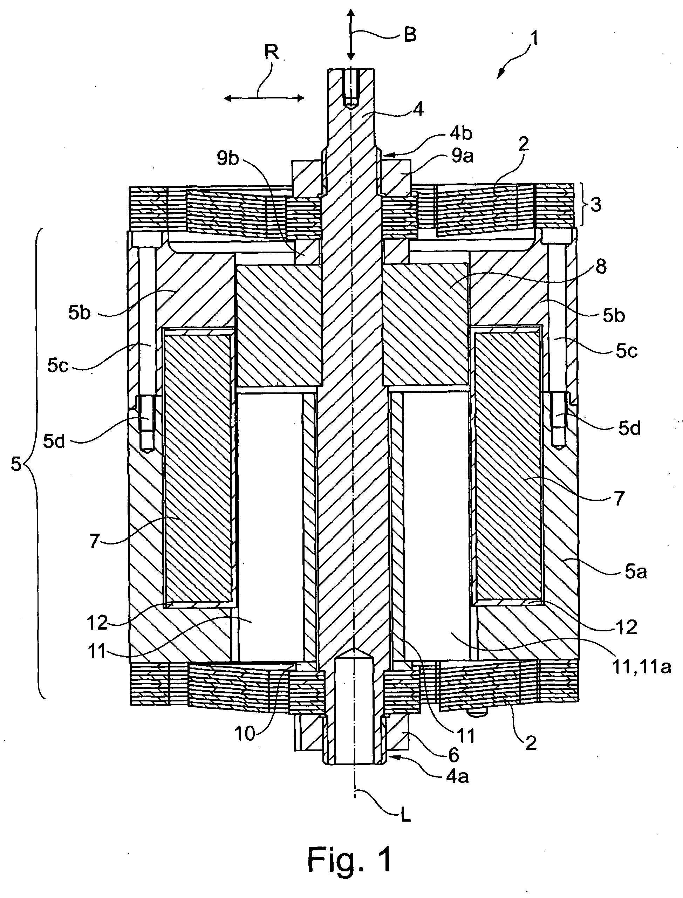

Figur 1 zeigt in einem Längsschnitt ein Hubmagnet 1 umfassend ein Gehäuse 5 , zwei beabstandet angeordnete Linearlager 3 mit Federn 2, einen in Längsrichtung L verlaufenden Hubmagnetstössel 4, der an den Linearlagern 3 bezüglich dem Gehäuse 5 in Bewegungsrichtung B verschiebbar gelagert ist, sowie ein mit dem Hubmagnetstössel 4 verbundener Anker 8 sowie ein mit dem Gehäuse verbundenes Elektromagnet 7. Das Gehäuse 5 umfasst ein unteres Gehäuseteil 5a sowie ein oberes Gehäuseteil 5b, welche über eine Schrauben 5c sowie ein Gewinde 5d miteinander verbunden sind. Im Gehäuse 5 ist ein statischer Eisenkern 11 mit Schlitzen 11a fest bezüglich des Gehäuses 5 angeordnet, wogegen der Anker 8 fest mit dem Hubmagnetstössel 4 verbunden ist. Der Hubmagnetstössel 4 ist über ein Befestigungsteil 10, mit Mutter 6 sowie über die beiden Befestigungsteile 9a, 9b mit dem unteren beziehungsweise dem oberen Linearlager 3 verbunden. Der Elektromagnet 7 ist von einem Isolationsmittel 12 umgeben. Das Hubmagnet 1 ist derart ausgebildet, dass ein durch das Elektromagnet 7 fliessender Strom den Anker 8 und somit den Hubmagnetstössel 4 nach unten zieht, wobei die Linearlager 3 eine Rückstellkraft aufweisen, sodass nach dem Ausschalten des Elektromagnet 7 sich der Hubmagnetstössel 4 wieder in die dargestellte Lage zurückbewegt.

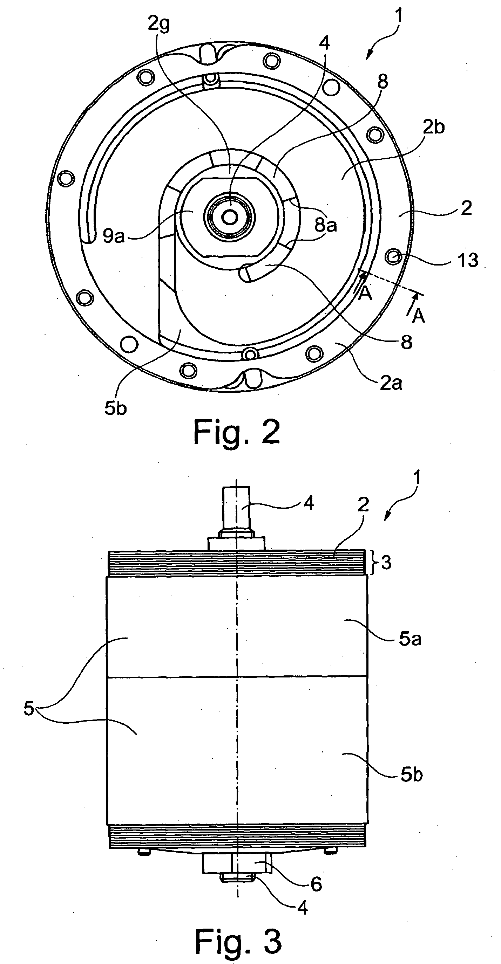

Figur 2 zeigt eine Draufsicht auf das in Figur 1 dargestellte Hubmagnet 1. Sichtbar ist eine Feder 2 umfassend ein ringförmiges Befestigungsteil 2a, ein Federteil 2b sowie einen Endabschnitt 2g, wobei der Hubmagnetstössel 4 über das Befestigungsteil 9a mit dem Endabschnitt 2g verbunden ist. Das Befestigungsteil 2a ist mit Hilfe von Befestigungsmitteln 13 am Gehäuse 5 befestigt. Zudem ist in Figur 2 teilweise das obere Gehäuseteil 5b sowie der Anker 8 mit Schlitzen 8a sichtbar.

Figur 3 zeigt eine Seitenansicht des in Figur 1 und 2 dargestellten Hubmagneten 1.

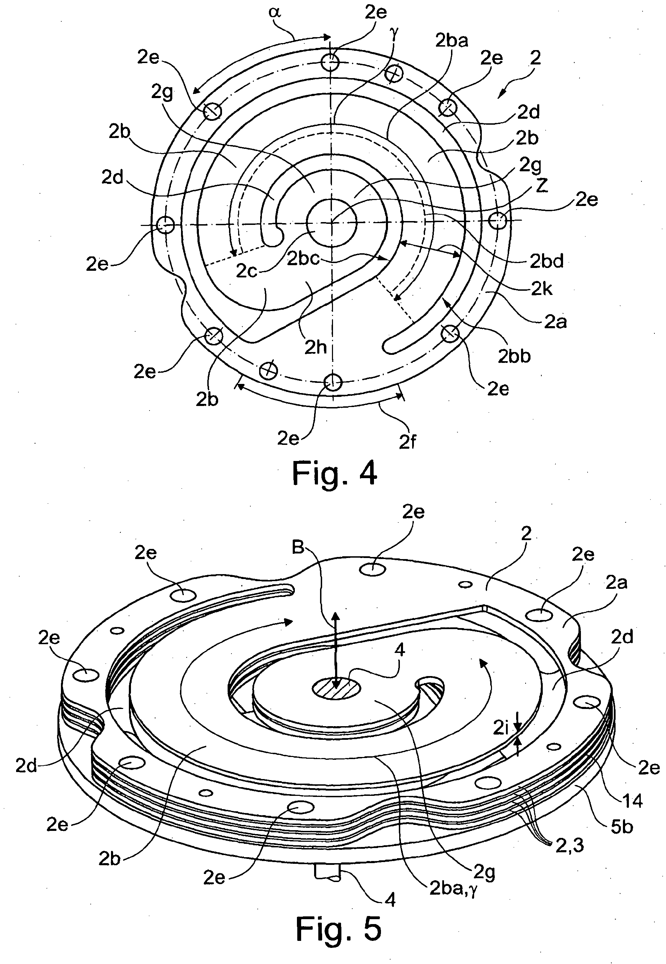

Figur 4 zeigt in einer Draufsicht die Ausgestaltung einer einzigen Feder 2. Die Feder 2 ist als eine Tellerfeder ausgestaltet, mit einem Befestigungsteil 2a und einer im Zentrum Z angeordneten Bohrung 2c, wobei die Feder 2 einen Federarm 2b aufweist, welcher ausgehend vom Befestigungsteil 2a in einem Endabschnitt 2g endet, wobei der Endabschnitt 2g die Bohrung 2c aufweist. Die Bohrung 2c ist konzentrisch bezüglich dem Befestigungsteil 2a angeordnet. Das Befestigungsteil 2a ist ringförmig ausgestaltet, erstreckt sich über einen Winkel von 360 Grad, und weist eine Mehrzahl von in Umfangsrichtung beabstandete Bohrungen 2e auf. Die Bohrungen 2e sind vorzugsweise gleichmässig beabstandet, beispielsweise um einen einheitlichen Winkel α, sodass benachbart angeordnete Federn 2 um den Winkels α oder ein Vielfaches des Winkels α gegenseitig verdreht angeordnet werden können. Das Befestigungsteil 2a könnte sich beispielsweise auch nur über eine Teilwinkel erstrecke bzw. nur teilweise ringförmig ausgestaltet sein, und sich beispielsweise über eine Winkel im Bereich zwischen 20 Grad und 350 Grad erstrecken. Der Federarm 2b streckt sich entlang eines Winkelbereichs zwischen 180° und 300°, wobei der Federarm 2b in Bezüglich der Bohrung 2c radialer Richtung eine Breite 2k aufweist, welche zumindest fünf Mal grösser ist als die Dicke 2i des spiralförmig verlaufenden Federarms 2b. Die Breite 2k des Federarms 2b ist derart ausgestaltet, dass dieser bezüglich dem ringförmigen Befestigungsteil 2a und dem Endabschnitt 2g unter Ausbildung eines seitlichen Spaltes 2d verläuft. Der Spalt 2d ist derart breit ausgestaltet, dass der Federarmabschnitt 2ba den Endabschnitt 2g und das Befestigungsteil 2a seitlich nicht berührt, wobei der Spalt 2d vorzugsweise eine Breite von zumindest 0,5 mm aufweist. Der Federarm 2b ist entlang des Winkelbereichs 2f mit dem ringförmigen Befestigungsteil 2a verbunden.

Der Federarm 2b umfasst einen konzentrisch zur Bohrung 2c verlaufenden Federarmabschnitt 2ba aufweist, der sich entlang eines Winkelbereichs γ zwischen 100° und 270° erstreckt. Im dargestellten Ausführungsbeispiel verläuft sowohl die Mittellinie 2bd des Federarmabschnittes 2ba als auch die äussere seitliche Begrenzung 2bb und die innere seitliche Begrenzung 2bc konzentrisch bezüglich dem Zentrum Z beziehungsweise konzentrisch zur Bohrung 2c. Dieser Federarmabschnitt 2ba weist in bezüglich dem Zentrum Z radialer Richtung eine konstante Breite 2k auf. Der Endabschnitt 2g umfasst vorteilhafterweise einen Verbindungsabschnitt 2h, wobei der Verbindungsabschnitt 2h vorteilhafterweise in bezüglich dem Zentrum Z radialer Richtung verläuft und mit dem Federarmabschnitt 2ba fest verbunden ist. Die Feder 2 besteht aus einem Stück. In einem weiteren vorteilhaften Ausführungsbeispiel könnte sich der Federarmabschnitt 2ba auch über einen Winkel γ im Bereich zwischen 180° und 300° erstrecken.

Die Feder 2 weist eine senkrecht zum Befestigungsteil 2a verlaufende Bewegungsrichtung B auf. Beim erfindungsgemässen Linearlager 3 sind eine Mehrzahl von Federn 2 in Bewegungsrichtung B nacheinander folgend angeordnet. Vorteilhafterweise sind die einzelnen Federn 2 in Umfangsrichtung des ringförmiges Befestigungsteil 2a gegenseitig versetzt angeordnet sind, wobei die einzelnen Federn 2 vorteilhafterweise um denselben Winkel in Umfangsrichtung gegenseitig versetzt angeordnet sind. Die Federn 2 bestehen vorteilhafterweise aus Metall, wobei die Feder 2 in Bewegungsrichtung B vorteilhafterweise eine Dicke im Bereich von 0,1 mm bis 5 mm aufweist.

Ein Linearlager umfasst vorteilhafterweise zumindest vier Federn 2 und vorzugsweise bis zu zehn Federn 2.

Figur 5 zeigt in einer perspektivischen Ansicht ein Linearlager 3 umfassend vier Federn 2, wobei die Federn in Umfangsrichtung um gegenseitig 90 Grad verdreht angeordnet sind. Das Linearlager 3 ist mit dem oberen Gehäuseteil 5b verbunden. Der Hubmagnetstössel 4 ist mit dem Endabschnitt 2g der Federn 2 verbunden, sodass der Hubmagnetstössel 4 in Bewegungsrichtung B verschiebbar gelagert ist.

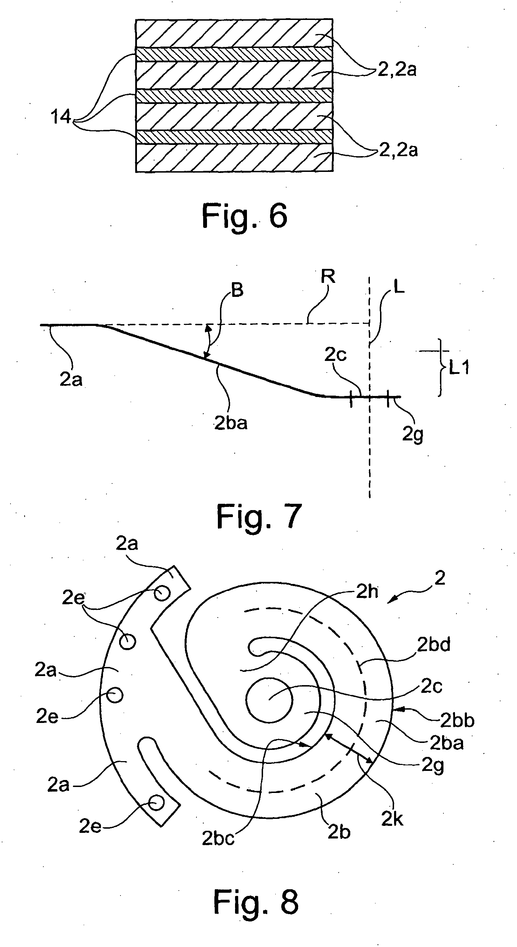

Figur 6 zeigt einen Schnitt entlang des in Figur 2 dargestellten Schnittes A-A. Figur 6 zeigt die ringförmigen Befestigungsteile 2a der Federn 2, zwischen welchen je ein Distanzring 14 angeordnet ist.

Figur 7 zeigt den Zustand der Feder 2 bei einem um die Distanz L1 in Längsrichtung L verschobenen Hubmagnetstössel 4. Die ausgelenkte Feder 2 ist in einer Seitenansicht sowie in Abwicklung dargestellt. Die Feder 2 ist über das ringförmige Befestigungsteil 2a mit dem Gehäuse 5 und dem Endabschnitt 2g mit dem Hubmagnetstössel 4 verbunden, weshalb in der Darstellung gemäss Figur 7 das Befestigungsteil 2a sowie der Endabschnitt 2g gegenseitig parallel verlaufen. Der dazwischen angeordnete Federarmabschnitt 2ba weist gegenüber der senkrecht zur Längsrichtung L verlaufenden Richtung R eine Steigung mit Winkel β auf. Der Federarmabschnitt 2ba weist vorzugsweise eine konstante Steigung auf.

Der Hubmagnet 1 weist vorteilhafterweise einen maximalen Hubweg B zwischen 0,4 mm und 5 mm auf, wobei die Federn 2 vorzugsweise derart ausgestaltet und angeordnet sind, dass der Federarmabschnitt 2ba bei maximalem Hubweg B in dessen Verlaufsrichtung eine Steigung β von weniger als 15° aufweist, bezüglich einer senkrecht zur Verlaufsrichtung L des Hubmagnetstössels 4 verlaufenden Richtung R.

Fig. 8 zeigt in einer Draufsicht ein weiteres Ausführungsbeispiel eines Federelementes 2, dessen Befestigungsteil 2a, im Unterschied zu dem in Figur 4 dargestellten Ausführungsbeispiel, nur teilweise ringförmig ausgestaltet ist, sodass sich das Befestigungsteil 2a nur über einen Teilwinkel von etwa 90 Grad erstreckt. Das Befestigungsteil 2a könnte derart ausgestaltet sein, dass sich das Befestigungsteil 2a in Umfangsrichtung entlang eines Teilwinkels im Bereich zwischen 20 Grad und 350 Grad erstreckt. Das Befestigungsteil 2a kann sich wie in Figur 4 dargestellt auch über einen Bereicht von 360 Grad erstrecken, sodass das Befestigungsteil 2a ringförmig ausgestaltet ist.

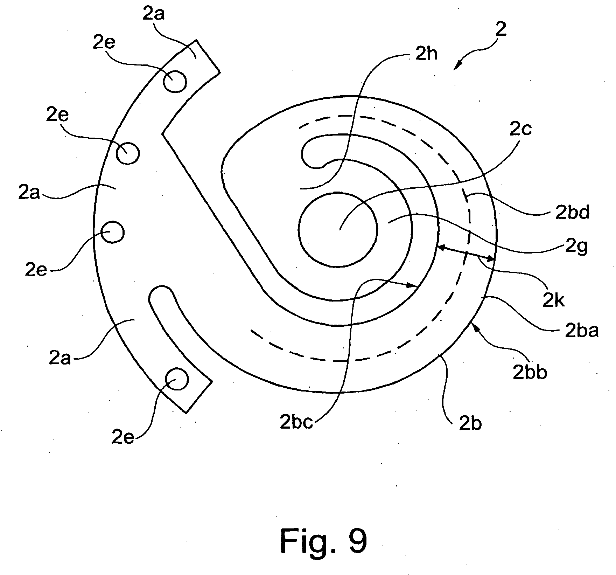

Fig. 9 zeigt in einer Draufsicht ein weiteres Ausführungsbeispiel eines Federelementes 2. Der Federarm 2b umfasst wiederum einen konzentrisch zur Bohrung 2c beziehungsweise konzentrisch zum Zentrum Z verlaufenden Federarmabschnitt 2ba, wobei unter "konzentrisch verlaufend" verstanden wird, dass zumindest die Mittenlinie 2bd des Federarmabschnittes 2ba konzentrisch bezüglich der Bohrung 2c beziehungsweise konzentrisch bezüglich dem Zentrum Z verläuft. Die in den Figuren 4 und 8 dargestellten Ausführungsbeispiele weisen eine äussere seitliche Begrenzung 2bb und eine innere seitliche Begrenzung 2bc auf, welche konzentrisch bezüglich dem Zentrum Z verlaufen, sodass der Federarmabschnitt 2ba in bezüglich dem Zentrum Z radialer Richtung eine konstante Breite 2k aufweist. Im Unterschied zu dem in Figur 8 dargestellten Ausführungsbeispiel ist der in Figur 9 dargestellte Federarmabschnitt 2ba derart ausgestaltet, dass dessen Mittenlinie 2bd wiederum konzentrisch bezüglich dem Zentrum Z verläuft, wogegen die äussere und die innere seitliche Begrenzung 2bb, 2bc derart verläuft, dass die Breite 2k des Federarmabschnittes 2ba, wie in Figur 9 dargestellt, zum Endabschnitt 2g beziehungsweise zum Verbindungsabschnitt 2h hin abnimmt, und vorzugsweise kontinuierlich abnimmt. Der Federarmabschnitt 2ba könnte jedoch auch derart ausgestaltet sein, dass dessen Breite 2k zum Verbindungsabschnitt 2h hin zunimmt, und vorzugsweise kontinuierlich zunimmt. Der Federarmabschnitt 2ba könnte jedoch auch derart ausgestaltet sein, dass dessen Breite 2k zum Verbindungsabschnitt 2h hin variierte, und streckenweise zunimmt und streckenweise abnimmt. Derartige Ausgestaltungen ermöglich es den Federarmabschnittes 2ba mit einer entlang des Federarmabschnittes 2ba sich verändernden, insbesondere zu- oder abnehmenden Federkonstante auszubilden.

## Patentansprüche

1. Linearlager (3) umfassend eine Mehrzahl von konzentrisch angeordneten Federn (2), wobei jede Feder (2) als eine Tellerfeder ausgestaltet ist mit einem Befestigungsteil (2a) und einer im Zentrum (Z) angeordneten Bohrung (2c), wobei das Befestigungsteil (2a) zumindest teilweise ringförmig ausgestaltet ist, wobei jede Feder (2) zudem einen Federarm (2b) aufweist, welcher ausgehend vom Befestigungsteil (2a) in einem Endabschnitt (2g) endet, wobei der Endabschnitt (2g) die Bohrung (2c) aufweist, und wobei die Bohrung (2c) konzentrisch zum Befestigungsteil (2a) angeordnet ist, wobei jede Feder (2) eine senkrecht zum Befestigungsteil (2a) verlaufende Bewegungsrichtung (B) aufweist, und wobei die Federn (2) in Bewegungsrichtung (B) nacheinander folgend angeordnet sind, **dadurch gekennzeichnet, dass** der Federarm (2b) einen konzentrisch bezüglich dem Zentrum (Z) verlaufenden Federarmabschnitt (2ba) mit einer Mittenlinie (2bd) aufweist, wobei der Federarmabschnitt (2ba) mit Mittenlinie (2bd) sich entlang eines Winkelbereichs (γ) zwischen 100° und 270°, und vorzugsweise sich entlang eines Winkelbereichs (γ) zwischen 180° und 300° erstreckt und die Mittenlinie (2bd) konzentrisch, mit einem konstanten, radialen Abstand bezüglich dem Zentrum (Z) verläuft, dass der Federarmabschnitt (2ba) in bezüglich des Zentrums (Z) radialer Richtung eine Breite (2k) aufweist, welche zumindest fünf Mal grösser ist als die Dicke (2i) des Federarms (2b), und dass die Breite (2k) des Federarmabschnitts (2ba) derart ausgestaltet ist, dass dieser bezüglich dem ringförmigen Befestigungsteil (2a) und dem Endabschnitt (2g) unter Ausbildung eines seitlichen Spaltes (2d) verläuft.

2. Linearlager nach Anspruch 1, **dadurch gekennzeichnet, dass** der Federarmabschnitt (2ba) in bezüglich dem Zentrum (Z) radialer Richtung eine konstante Breite (2k) aufweist.

3. Linearlager nach Anspruch 1, **dadurch gekennzeichnet, dass** der Federarmabschnitt (2ba) entlang des Winkelbereichs (γ) in bezüglich dem Zentrum (Z) radialer Richtung eine abnehmende Breite (2k) aufweist.

4. Linearlager nach einem der vorhergehenden Ansprüche, **dadurch gekennzeichnet, dass** der Endabschnitt (2g) zwischen dem Federarm (2b) und der Bohrung (2c) einen bezüglich dem Zentrum (Z) radial verlaufenden Verbindungsabschnitt (2h) aufweist.

5. Linearlager nach einem der vorhergehenden Ansprüche, **dadurch gekennzeichnet, dass** zwischen zwei ringförmigen Befestigungsteilen (2a) zweier in Bewegungsrichtung (B) nebeneinander angeordneter Federn (2) ein Distanzring (14) angeordnet ist.

6. Linearlager nach einem der vorhergehenden Ansprüche, **dadurch gekennzeichnet, dass** die einzelnen Federn (2) in Umfangsrichtung des ringförmiges Befestigungsteil (2a) gegenseitig versetzt angeordnet sind.

7. Linearlager nach Anspruch 6, **dadurch gekennzeichnet, dass** jede der einzelnen Federn (2) um denselben Winkel im Umfangsrichtung gegenseitig versetzt angeordnet ist.

8. Linearlager nach einem der vorhergehenden Ansprüche, **dadurch gekennzeichnet, dass** jede Feder (2) aus Metall besteht, und dass die Feder (2) in Bewegungsrichtung (B) eine Dicke im Bereich von 0,1 mm bis 5 mm aufweist.

9. Linearlager nach einem der vorhergehenden Ansprüche, **dadurch gekennzeichnet, dass** dieses zumindest vier Federn (2) und vorzugsweise zehn Federn (2) umfasst.

10. Linearlager nach einem der vorhergehenden Ansprüche, **dadurch gekennzeichnet, dass** das Befestigungsteil (2a) ringförmig ausgestaltet ist und sich über 360 Grad erstreckt.

11. Hubmagnet (1) umfassend ein Linearlager (3) nach einem der vorhergehenden Ansprüche.

12. Hubmagnet (1) nach Anspruch 11, umfassend ein Gehäuse (5) sowie zwei in Bewegungsrichtung (B) gegenseitig beabstandet angeordnete Linearlager (3), welche mit dem Gehäuse (5) verbunden sind, sowie umfassend einen Hubmagnetstössel (4), welcher durch die Bohrungen (2c) verläuft und welcher mit beiden Linearlagern (3) verbunden ist, wobei ein Anker (8) mit dem Hubmagnetstössel (4) verbunden ist, und wobei im Gehäuse (5) ein Elektromagnet (7) derart bezüglich dem Anker (8) angeordnet ist, dass der Elektromagnet (7) unter Strom den Anker (8) anzieht.

13. Hubmagnet nach einem der Ansprüche 11 oder 12, **dadurch gekennzeichnet, dass** dieser einen maximalen Hubweg (B) zwischen 0,4 mm und 5 mm aufweist, und dass die Federn (2) derart ausgestaltet und angeordnet sind, dass der Federarmabschnitt (2ba) bei maximalem Hubweg (B) in dessen Verlaufsrichtung eine Steigung von weniger als 15° aufweist, bezüglich einer senkrecht zur Verlaufsrichtung (L) des Hubmagnetstössels (4) verlaufenden Richtung (R).

14. Hubmagnet nach einem der Ansprüche 11 bis 13, **dadurch gekennzeichnet, dass** zumindest eines der Linearlager (3) in Bewegungsrichtung (B) vorgespannt angeordnet ist.

## Claims

1. A linear bearing (3) comprising a plurality of concentrically arranged springs (2), wherein each spring (2) is configured as a disk spring having a fastening part (2a) and a bore (2c) arranged in a center (Z), wherein the fastening part (2a) is configured at least partly ring-shaped, wherein each spring (2) further comprises a spring arm (2b) which, starting from the fastening part (2a), ends in an end section (2g), wherein the end section (2g) has the bore (2c) and wherein the bore (2c) is concentrically arranged with respect to the fastening part (2a), wherein each spring (2) has a movement direction (B) running perpendicular to the fastening part (2a), and wherein the springs (2) are arranged following one another in the movement direction (B), **characterized in that** the spring arm (2b) has a spring arm section (2ba) with a central line (2bd) running concentrically with respect to the center (Z), the spring arm section (2ba) with central line (2bd) extending over an angular range (γ) of between 100° and 270° and preferably extending over an angular range (γ) of between 180° and 300°; and **in that** the central line (2bd) runs concentrically, and with a constant, radial distance with respect to the center (Z), **in that** the spring arm section (2ba) has a width (2k) in a radial direction with respect to the center (Z), said width being at least five times larger than the thickness (2i) of the spring arm (2b); and **in that** the width (2k) of the spring arm section (2ba) is configured in such a way that this extends with respect to the ring-shaped fastening part (2a) and the end section (2g) on the formation of a lateral gap (2d).

2. A linear bearing in accordance with claim 1, **characterized in that** the spring arm section (2ba) has a constant width (2k) in a radial direction with respect to the center (Z).

3. A linear bearing in accordance with claim 1, **characterized in that** the spring arm section (2ba) has, in a radial direction with respect to the center (Z), a decreasing width (2k) along the angular range (γ).

4. A linear bearing in accordance with any one of the preceding claims, **characterized in that** the end section (2g) has a connection section (2h) running radially with respect to the center (Z) between the spring arm (2b) and the bore (2c).

5. A linear bearing in accordance with any one of the preceding claims, **characterized in that** a spacer ring (14) is arranged between two ring-shaped fastening parts (2a) of two springs (2) arranged next to one another in the movement direction (B).

6. A linear bearing in accordance with any one of the preceding claims, **characterized in that** the individual springs (2) are arranged mutually displaced in the circumferential direction of the ring-shaped fastening part (2a).

7. A linear bearing in accordance with claim 6, **characterized in that** each of the individual springs (2) is arranged mutually displaced by the same angle in the circumferential direction.

8. A linear bearing in accordance with any one of the preceding claims, **characterized in that** each spring (2) is composed of metal, and **in that** the spring (2) has a thickness in the range of 0.1 mm to 5 mm in the movement direction (B).

9. A linear bearing in accordance with any one of the preceding claims, **characterized in that** this comprises at least four springs (2) and preferably comprises ten springs (2).

10. A linear bearing in accordance with any one of the preceding claims, **characterized in that** the fastening part (2a) is configured ring-like and extends over 360 degrees.

11. A solenoid (1) comprising a linear bearing (3) in accordance with any one of the preceding claims.

12. A solenoid (1) in accordance with claim 11, comprising a housing (5) as well as two linear bearings (3) arranged mutually spaced apart in the movement direction (B), the linear bearings being connected to the housing (5), as well as comprising a solenoid ram (4) which extends through the bores (2c) and which is connected to the two linear bearings (3), wherein an anchor (8) is connected to the solenoid ram (4) and wherein an electromagnet (7) is arranged in the housing (5) with respect to the anchor (8) in such a way that the electromagnet (7) attracts the anchor (8) when the electromagnet is energized.

13. A solenoid in accordance with one of the claims 11 or 12, **characterized in that** this has a maximum lifting path (B) of between 0.4 mm and 5 mm, and **in that** the springs (2) are configured and arranged in such a way that the spring arm section (2ba) has an inclination of less than 15° in its direction of extent for the maximum lifting path (B) with respect to a direction (R) running perpendicular to the direction of extent (L) of the solenoid ram (4).

14. A solenoid in accordance with any one of the preceding claims 11 to 13, **characterized in that** at least one linear bearing (3) is arranged biased with respect to the movement direction (B).

## Revendications

1. Palier linéaire (3) comprenant une multiplicité de ressorts (2) disposés de façon concentrique, dans lequel chaque ressort (2) est réalisé sous forme de rondelle élastique avec une partie de fixation (2a) et un trou (2c) percé en son centre (Z), dans lequel la partie de fixation (2a) est configurée au moins partiellement sous forme annulaire, dans lequel chaque ressort (2) présente en outre un bras élastique (2b), qui se termine en une partie d'extrémité (2g) à partir de la partie de fixation (2a), dans lequel la partie d'extrémité (2g) présente le trou (2c), et dans lequel le trou (2c) est en position concentrique par rapport à la partie de fixation (2a), dans lequel chaque ressort (2) présente une direction de mouvement (B) orientée perpendiculairement à la partie de fixation (2a), et dans lequel les ressorts (2) sont disposés l'un à la suite de l'autre dans la direction de mouvement (B), **caractérisé en ce que** le bras de ressort (2b) présente une partie de bras de ressort (2ba) s'étendant de façon concentrique par rapport au centre (Z) et présentant une ligne centrale (2bd), dans lequel la partie de bras de ressort (2ba) avec la ligne centrale (2bd) s'étend le long d'une plage angulaire (γ) comprise entre 100° et 270°, et de préférence le long d'une plage angulaire (γ) comprise entre 180° et 300° et la ligne centrale (2bd) s'étend de façon concentrique à une distance radiale constante par rapport au centre (Z), **en ce que** la partie de bras de ressort (2ba) présente en direction radiale par rapport au centre (Z) une largeur (2k), qui est au moins cinq fois plus grande que l'épaisseur (2i) du bras de ressort (2b), et **en ce que** la largeur (2k) de la partie de bras de ressort (2ba) est configurée de telle manière que celui-ci s'étende, par rapport à la partie de fixation annulaire (2a) et la partie d'extrémité (2g), en formant une fente latérale (2d).

2. Palier linéaire selon la revendication 1, **caractérisé en ce que** la partie de bras de ressort (2ba) présente en direction radiale par rapport au centre (Z) une largeur constante (2k).

3. Palier linéaire selon la revendication 1, **caractérisé en ce que** la partie de bras de ressort (2ba) présente en direction radiale par rapport au centre (Z) une largeur (2k) décroissante le long de la plage angulaire (γ).

4. Palier linéaire selon l'une quelconque des revendications précédentes, **caractérisé en ce que** la partie d'extrémité (2g) présente entre le bras de ressort (2b) et le trou (2c) une partie de liaison (2h) s'étendant radialement par rapport au centre (Z).

5. Palier linéaire selon l'une quelconque des revendications précédentes, **caractérisé en ce qu'**une bague d'écartement (14) est disposée entre deux parties de fixation annulaires (2a) de deux ressorts (2) disposés l'un à côté de l'autre dans la direction de mouvement (B).

6. Palier linéaire selon l'une quelconque des revendications précédentes, **caractérisé en ce que** les ressorts individuels (2) sont disposés de façon décalée l'un par rapport à l'autre dans la direction périphérique de la partie de fixation annulaire (2a).

7. Palier linéaire selon la revendication 6, **caractérisé en ce que** chacun des ressorts individuels (2) est disposé de façon décalée l'un par rapport à l'autre du même angle dans la direction périphérique.

8. Palier linéaire selon l'une quelconque des revendications précédentes, **caractérisé en ce que** chaque ressort (2) est composé de métal, et **en ce que** le ressort (2) présente dans la direction de mouvement (B) une épaisseur comprise dans la plage de 0,1 mm à 5 mm.

9. Palier linéaire selon l'une quelconque des revendications précédentes, **caractérisé en ce qu'**il comprend au moins quatre ressorts (2), et de préférence dix ressorts (2).

10. Palier linéaire selon l'une quelconque des revendications précédentes, **caractérisé en ce que** la partie de fixation (2a) est de forme annulaire et s'étend sur 360 degrés.

11. Aimant de levage (1) comprenant un palier linéaire (3) selon l'une quelconque des revendications précédentes.

12. Aimant de levage (1) selon la revendication 11, comprenant un boîtier (5) ainsi que deux paliers linéaires (3) disposés à distance l'un de l'autre dans la direction de mouvement (B), qui sont assemblés au boîtier (5), et comprenant également un poussoir d'aimant de levage (4), qui passe à travers les trous (2c) et qui est assemblé aux deux paliers linéaires (3), dans lequel un induit (8) est assemblé au poussoir d'aimant de levage (4), et dans lequel un électroaimant (7) est disposé dans le boîtier (5) de telle manière, par rapport à l'induit (8), que l'électroaimant (7) attire l'induit (8) sous l'action d'un courant.

13. Aimant de levage selon l'une des revendications 11 ou 12, **caractérisé en ce que** celui-ci présente une course de levage maximale (B) comprise entre 0,4 mm et 5 mm, et **en ce que** les ressorts (2) sont configurés et disposés de telle manière que, à la course de levage maximale (B), la partie de bras de levage (2ba) présente dans la direction de son extension une pente de moins de 15°, par rapport à une direction (R) orientée perpendiculairement à la direction (L) d'extension du poussoir d'aimant de levage (4).

14. Aimant de levage selon l'une quelconque des revendications 11 à 13, **caractérisé en ce qu'**au moins un des paliers linéaires (3) est disposé avec une précontrainte dans la direction de mouvement (B).
